# EUROPEAN PATENT APPLICATION

(11) **EP 1 717 531 A1**
(43) Date of publication of application: **02.11.2006**
(21) Application number: 06008836.6
(22) Date of filing: 27.04.2006
(51) Int. Cl.: F25B 49/02, F04B 27/18

(54) **Air conditioner and control system thereof**

(30) Priority: 28.04.2005 JP 2005133298
(71) Applicant: Calsonic Kansei Corporation, Tokyo 164-8602 (JP)
(72) Inventor: Nakamura, Kojiro, Nakano-ku Tokyo 164-8602 (JP)
(74) Representative: Grünecker, Kinkeldey, Stockmair & Schwanhäusser Anwaltssozietät

(57) **Abstract**

An air conditioner includes: a compressor (101) configured to compress a refrigerant, an outside heat exchanger (102) configured to exchange heat of the compressed refrigerant; a pressure reducing unit (103) configured to reduce the pressure of the heat-exchanged refrigerant; an inside heat exchanger (104) configured to vaporize the reduced pressure refrigerant; a discharge pressure detector (110) configured to detect a discharge pressure of the refrigerant discharged from the compressor (101); a controller (111) configured to set a duty factor in accordance with the detected discharge pressure; and a control valve (107) configured to adjust a discharge capacity of the compressor (101) in accordance with the duty factor. The controller (111) controlling, during a start-up operation of the compressor (101), the duty factor provided to the control valve (107) so that the discharge pressure detected by the discharge pressure detector (110) is maintained within a predetermined range and so that the duty factor goes to a maximum system duty factor.

## Description

### CROSS REFERENCE TO RELATED APPLICATIONS AND INCORPORATION BY REFERENCE

This application is based on and claims the benefit of priority from the prior Japanese Patent Application No. 2005-133298 filed on April 28, 2005; the entire contents of which are incorporated herein by reference.

### BACKGROUND OF THE INVENTION

### 1. Field of the Invention

The present invention relates to an air conditioner having a refrigeration cycle that uses a supercritical fluid as a refrigerant.

### 2. Description of the Related Art

A refrigeration cycle generally drives a compressor to a full-stroke state in a short period of time in a start-up operation, to quickly stabilize the refrigeration cycle.

Some recent air conditioners for vehicles have a refrigeration cycle that uses a supercritical fluid, such as a carbon dioxide gas as a refrigerant. The supercritical fluid refrigerant has a reduced affect to contribute to global warming.

Under a high heat load at an ambient temperature of 40°C or higher, the refrigeration cycle using a the supercritical fluid refrigerant generally shows an equilibrium state at a pressure of about 8 to 11 Mpa, even when the refrigeration cycle is stopped, If the refrigeration cycle is started in this state, a discharge pressure of the compressor on the high-pressure side of the refrigeration cycle suddenly increases and may damage components of the refrigeration cycle.

To avoid this problem, the related art (for example, Japanese Unexamined Patent Application Publication No. 2002-61968) discloses a vehicle air conditioner. Therein, if a heat load (for example an ambient temperature) is greater than a predetermined value upon start-up of the compressor, a duty factor set for an electrical control valve that controls a discharge capacity of the compressor is reduced, and drives the compressor for a predetermined time with the reduced duty factor. Thereafter, the reduced duty-factor is switched to a normal control operation. When a heat load is high, the related art can start a compressor without a sudden excessive increase of the discharge pressure of the compressor.

### SUMMARY OF THE INVENTION

The above-mentioned related art, however, always spends the predetermined start-up time whenever a heat load is high, without regard to the condition of the refrigerant in the refrigeration cycle.

The present invention was developed, based on the fact that, after a long stoppage, a refrigerant in a refrigeration cycle is in an equilibrium state and there is no pressure difference between inlet and discharge pressures of a compressor and that, after a short stoppage, a pressure difference remains between inlet and discharge pressures of the compressor.

An object of the present invention is to provide an air conditioner capable of preventing a discharge pressure from excessively increasing during a start-up operation and minimizing a start-up time.

An aspect of the present invention provides an air conditioner including a compressor configured to compress a refrigerant, an outside heat exchanger configured to make the compressed radiate heat, a pressure reducing unit configured to reduce the pressure of the heat-radiated refrigerant, an inside heat exchanger configured to vaporize the reduced pressure refrigerant, a discharge pressure detector configured to detect a discharge pressure of the refrigerant discharged from the compressor, a controller configured to provide a duty factor according to the detected discharge pressure, and a control valve configured to adjust a discharge capacity of the compressor according to the provided duty factor. The controller is operative, during a start-up operation of the compressor, to control the duty factor provided to the control valve so that the discharge pressure detected by the discharge pressure detector is maintained within a predetermined range, and so that the duty factor goes to a maximum system duty factor.

### BRIEF DESCRIPTION OF THE DRAWINGS

Figure 1 is a schematic view showing an air conditioner according to an embodiment of the present invention;
Fig. 2 is a sectional view showing a compressor of the air conditioner of Fig. 1;
Fig. 3 is a schematic view showing an electrical control valve of the compressor of Fig. 2;
Fig. 4 is a graph showing a relationship between a duty factor and a discharge capacity;
Fig. 5 is a flowchart showing steps of setting a duty factor with a control amplifier during a start-up operation; and
Fig. 6 is a graph showing the relationship between a start-up time, a duty factor, and a discharge pressure.

### DETAILED DESCRIPTION OF EMBODIMENTS

An air conditioner according to an embodiment of the present invention will be explained. The air conditioner of this embodiment has a refrigeration cycle that uses a supercritical fluid, e.g., a carbon dioxide gas, as a refrigerant.

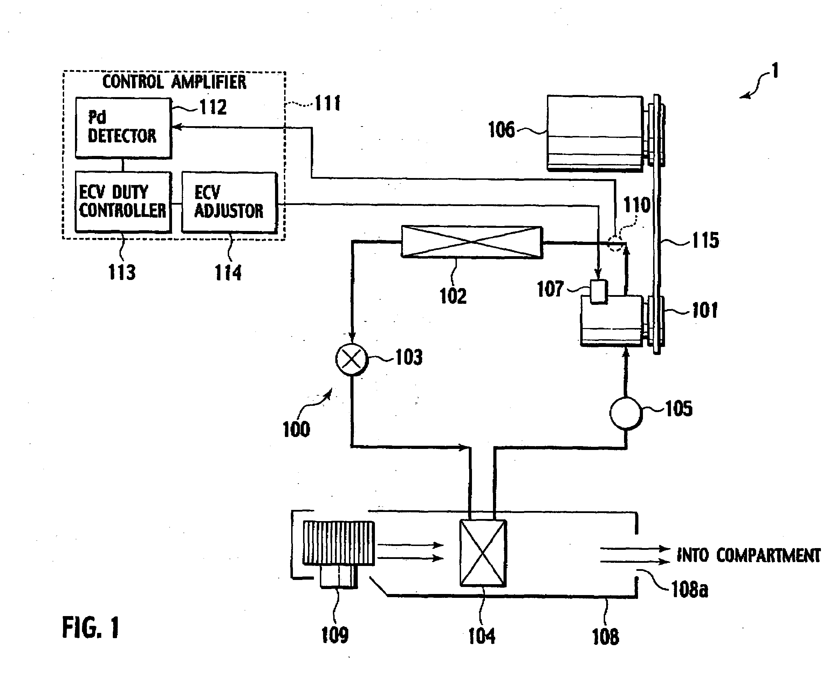

Figure 1 is a schematic view showing the air conditioner according to the embodiment. In Fig. 1, the air conditioner is a vehicle air conditioner installed in the vehicle 1 and includes the refrigeration cycle 100 that circulates a carbon dioxide gas, as a refrigerant, and conducts heat exchange between the refrigerant and air.

The refrigeration cycle 100 includes a variable capacity compressor 101, an outside heat exchanger 102, a pressure reducing unit 103, an inside heat exchanger 104, and an accumulator 105. The components 101 to 105 are connected in series through conduits. The compressor 101 supplies kinetic energy to the refrigerant so that the refrigerant is successively circulated through the components 101 to 105.

The compressor 101 is arranged outside of a passenger compartment of the vehicle 1. For example, the compressor 101 is arranged in an engine compartment. A vehicle engine 106 generates torque, which is transmitted through a belt 115 to the compressor 101, to drive the compressor 101. The compressor 101 takes in a low-pressure gaseous refrigerant from the accumulator 105, compresses the refrigerant, and discharges a high-temperature, high-pressure gaseous refrigerant to the outside heat exchanger 102.

The outside heat exchanger 102 is arranged outside the passenger compartment and radiates heat of the high-temperature, high-pressure gaseous refrigerant discharged from the compressor 101 to outside air. The outside heat exchanger 102 is provided with a blower, such as an electric fan, to blow outside air toward the outside heat exchanger 102. Heat is exchanged between the refrigerant passing through the outside heat exchanger 102 and the outside air, to dissipate the heat of the refrigerant.

The pressure reducing unit 103 receives the high-pressure gaseous refrigerant from the outside heat exchanger 102, reduces the pressure thereof, i.e., expands the volume thereof, and provides a low-temperature, low-pressure misty refrigerant.

The inside heat exchanger 104 is arranged in an air conditioning duct 108. In the duct 108a an air conditioning fan 109 generates an air conditioning air flow. Heat of the air flow is absorbed by the low-temperature, low-pressure misty refrigerant supplied from the pressure reducing unit 103 and passed through the inside heat exchanger 104. Namely, the refrigerant passing through the inside heat exchanger 104 evaporates to take heat away from the air flow passing through the duct 108. The heat-deprived air flow in the duct 108 is dehumidified to be a cool air flow, which is blown through an outlet 108a into the passenger compartment.

The accumulator 105 separates the refrigerant discharged from the inside heat exchanger 104 into a gas and a liquid. The separated liquid refrigerant is accumulated and the separated gaseous refrigerant is supplied to the compressor 101.

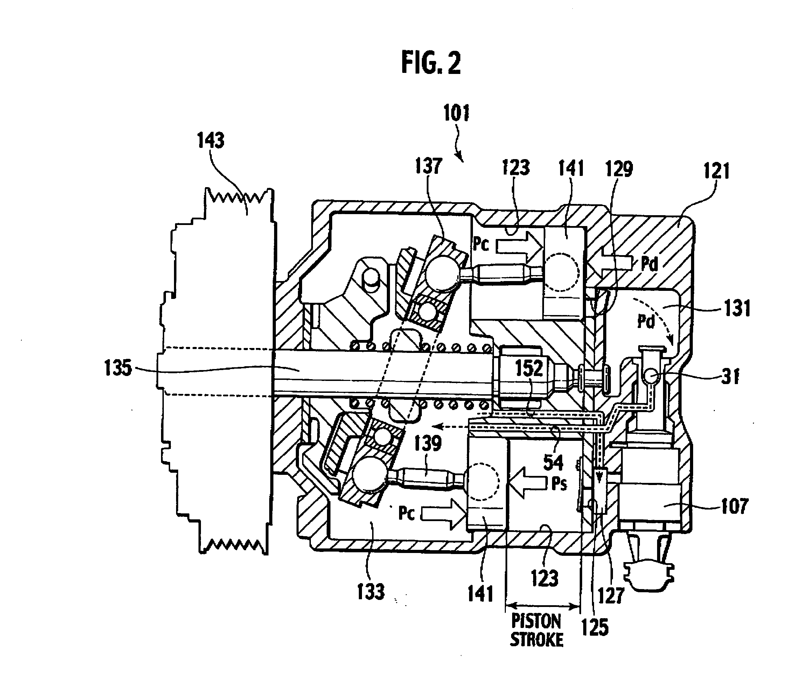

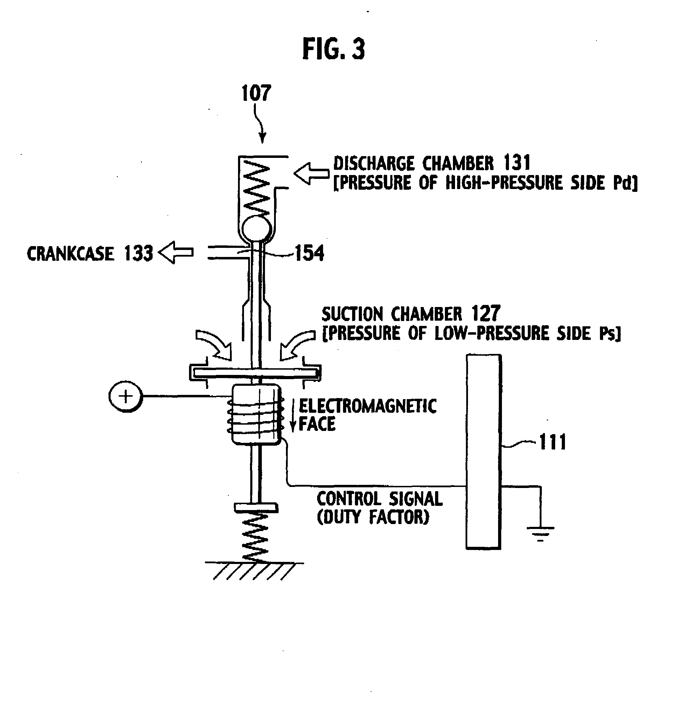

Figures 2 and 3 show details of the compressor 101.

The compressor 101 is a swash plate-type compressor that has a swash plate 137 and is capable of changing the piston stroke corresponding to the inclination angle of the swash plate 137.

In Fig. 2, the compressor 101 includes a housing 121. The housing 121 accommodates cylinder bores 123, a suction chamber 127 communicating through a suction hole 125 with a top dead center side of the cylinder bore 123, a discharge chamber 131 communicating through a discharge hole 129 with the top dead center side of the cylinder bore 123, and a crankcase 133 communicating with a bottom dead center side of each cylinder bore 123. The housing 121 supports a rotatable drive shaft 135 in the crankcase 133. In the crankcase 133, the swash plate 137 is connected to the drive shaft 135 and is inclinable relative to the drive shaft 135. The cylinder bore 123 accommodates a piston 141 that is slidable therein and is linked through a piston rod 139 with the swash plate 137. Outside the housing 121, a pulley 143 is integral with the drive shaft 135.

When the drive shaft 135 rotates, the swash plate 137 oscillates in an axial direction of the cylinder bore 123, so that the piston 141 reciprocates in the cylinder bore 123. In response to the reciprocation of the piston 141, a low-pressure refrigerant in the suction chamber 127 is drawn into the cylinder bore 123 and is compressed in the cylinder bore 123. The compressed high-pressure refrigerant is discharged into the discharge chamber 131.

As used herein, "Ps" is the pressure of a refrigerant on low-pressure side of the refrigeration cycle which introduced into the compressor 101 and corresponds to a pressure in the suction chamber 127. "Pd" is the pressure of a refrigerant on high-pressure side of the refrigeration cycle which discharged from the compressor 101 and corresponds to a pressure in the discharge chamber 131. "Pc" is a pressure in the crankcase 133 of the compressor 101.

In the compressor 101, the piston 141 receives, as a back pressure, a pressure Pc of the crankcase 133. Controlling the pressure Pc adjusts a pressure difference (Pc - Ps) acting on the piston 141. Adjusting the pressure difference changes an inclination of the swash plate 137 relative to the drive shaft 135, thereby changing the piston stroke, i.e., the discharge capacity of the compressor 101.

To adjust the pressure Pc of the crankcase 133, the compressor 101 includes: a pressure purging path 152 that connects the crankcase 133 and suction chamber 127 to each other to always purge the pressure of the crankcase 133 to the suction chamber 127; a pressure introducing path 154 that connects the crankcase 133 and discharge chamber 131 to each other to introduce a pressure Pd of the discharge chamber 131 into the crankcase 133; and an electric control valve (hereinafter referred to as "ECV") 107 that opens and closes the pressure introducing path 154.

The ECV 107 is, for example, a solenoid valve whose opening is controlled in response to an external electrical signal. The external electric signal (control signal) is supplied from a control amplifier 111 as a controller to the ECV 107 to adjust the opening of the ECV 107 and introduce/stop the high pressure Pd from the discharge chamber 131 into the crankcase 133 through the pressure introducing path 154. As a result, the pressure Pc in the crankcase 133 can be controlled. The control operation will change the pressure difference (Pc - Ps) between the crankcase 133 and the suction chamber 127, i.e., a pressure balance acting on the piston 141, thereby changing the inclination of the swash plate 137. Consequently, the piston stroke is changed so as to change the refrigerant discharge capacity of the compressor 101. The control signal from the control amplifier 111 to the ECV 107 sets a duty factor. The duty factor determines an opening (open time or open area) of the ECV 107 that determines a discharge capacity of the compressor 101.

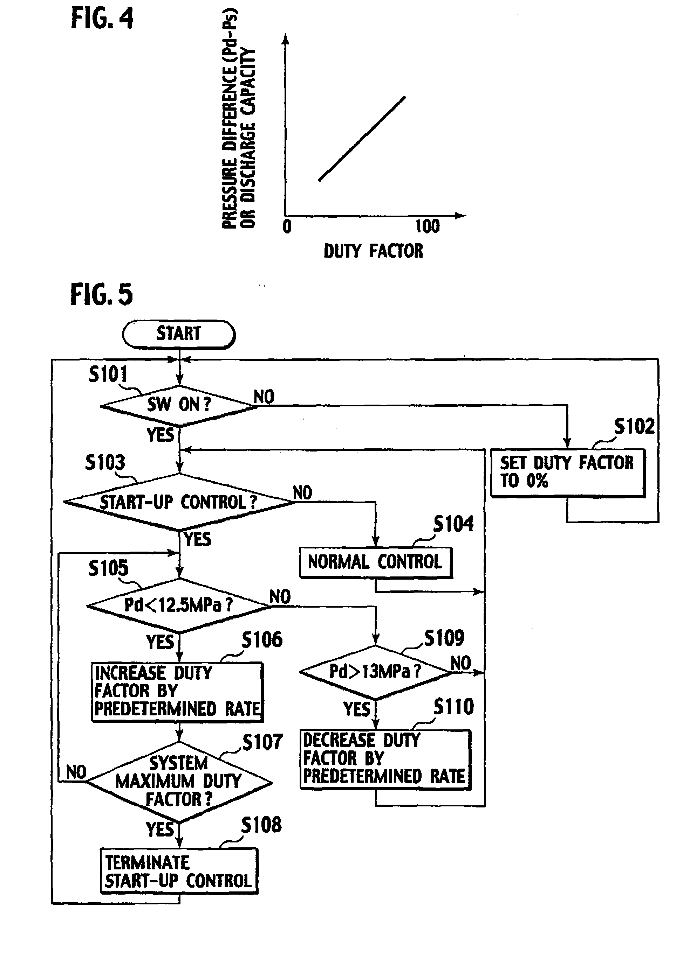

Figure 4 is a graph showing a relationship between a duty factor and discharge capacity of the compressor. As the duty factor increases, the refrigerant discharge capacity of the compressor 101 increases. More specifically, increasing the duty factor reduces the opening of the pressure introducing path 154 to reduce the flow rate of a high-pressure refrigerant passing through the pressure introducing path 154, decrease the pressure Pc in the crankcase 133, decrease the pressure difference (Pc - Ps), increase the piston stroke, and expand the discharge capacity of the compressor 101. On the other hand, reducing the duty factor increases the opening of the pressure introducing path 154, to increase the flow rate of a high-pressure refrigerant passing through the pressure introducing path 154, increase the pressure Pc in the crankcase 133, increase the pressure difference (Pc - Ps), reduce the piston stroke, and decrease the discharge capacity of the compressor 101.

If the duty factor is set to a minimum system duty factor of 0%, the high pressure Pd in the discharge chamber 131 is applied into the crankcase 133, to increase the pressure Pc in the crankcase 133, maximizes the inclination of the swash plate 137 relative to the drive shaft 135 (substantially at a right angle), destrokes the piston 141, i.e., the stroke of the piston 141 goes to zero, thereby minimizing the discharge capacity of the compressor 101.

If the duty factor is set to a maximum system duty factor of 100%, the discharge chamber 131 does not introduce any pressure into the crankcase 133. As a result, the pressure Pc in the crankcase 133 decreases to minimize (about 45 degrees in this embodiment) the inclination of the swash plate 137 relative to the drive shaft 135 permit full stroke movement of the piston 141, thereby maximizing the discharge capacity of the compressor 101.

The maximum system duty factor is preset to permit full stroke movement of the piston 141, but the duty factor, is not limited to 100%. The maximum system duty factor is dependent on the characteristics of the compressor 101 and ECV 107 and may be about 80% or other appropriate percentage.

A correlation between a duty factor and a pressure difference (Pd - Ps) of the compressor 101 is similar to that between the duty factor and a discharge capacity, and therefore, the ordinate of Fig. 4 may be considered as the pressure difference (Pd - Ps) of the compressor 101.

An example of the operation of the control amplifier (controller) 111 will be explained in detail.

As shown in Fig. 1, on a discharge side (high-pressure side) of the compressor 101, a discharge pressure sensor (discharge pressure detector) 110 is provided for detecting a refrigerant discharge pressure Pd of the compressor 101. The detected discharge pressure Pd is transmitted to the control amplifier 111.

The control amplifier (controller) 111 includes a Pd detector 112 for receiving a signal indicative of the discharge pressure Pd from the discharge pressure sensor 110, an ECV duty controller 113 for setting a duty factor for the ECV 107 according to the discharge pressure Pd, and an ECV adjuster 114 for transmitting an electrical signal to the ECV 107 according to the set duty factor.

The control amplifier 111 may be a microcomputer including a CPU, a ROM, a RAM, I/O ports, and the like. According to a control program stored in the ROM, the control amplifier 111 determines a duty factor for the ECV 107 and outputs an electrical signal representative of the duty factor.

Control of the refrigeration cycle 100 according to the embodiment will be explained. Figure 5 is a flowchart showing steps carried out by the control amplifier 111 when setting a duty factor for the ECV 107 at the start of the compressor 101. When a driver of the vehicle, which uses the refrigeration cycle 100, turns on an AC (air conditioner) switch on a control panel of the air conditioner, the steps of Fig. 5 start.

In step S101, the ECV duty controller 113 of the control amplifier 111 checks to see if the compressor switch SW is ON. If it is not ON, the ECV duty controller 113 sets a duty factor of 0% and transmits it to the ECV adjuster 114 in step S102. Then, the ECV adjuster 114 transmits an electrical signal to the ECV 107 with an electric signal representative of the duty factor of 0%.

If the compressor switch is ON in step S101, the ECV duty controller 113 determines, in step S103, whether or not start-up control is being carried out. If the start-up control is not being carried out, normal control is started in step S104. The discharge capacity of the compressor 101 is controlled so that a temperature set by the driver, through the control panel, is attained.

If the start-up control is in operation in step S103, step S105 determines whether or not the refrigerant discharge pressure Pd, detected by the Pd detector 112, is less than a first set value of 12.5 Mpa. If the discharge pressure Pd is below 12.5 Mpa, the ECV duty controller 113 increases, in step S106, a duty factor supplied to the ECV adjuster 114 at a predetermined rate (for example, 1%/sec). Based on the increased duty factor, the ECV adjuster 114 transmits an electrical signal to the ECV 107.

In step S107, the ECV duty controller 113 checks to see if the duty factor provided to the ECV adjuster 114 is equal to a maximum system duty factor. If it is not equal to the maximum system duty factor, step S105 is again carried out. Thereafter, the duty factor is again increased by the predetermined rate if a detected discharge pressure Pd is less than 12.5 Mpa. These steps are repeated until the duty factor provided to the ECV adjuster 114 reaches the maximum system duty factor.

If the duty factor provided to the ECV adjuster 114 is equal to the maximum system duty factor in step S107, the start-up control is terminated in step S108, and step S101 is again carried out. In this case, step S103 determines that the start-up control is not being carried out, and therefore, the normal control operation is started in step S104.

If the discharge pressure Pd is not less than 12.5 Mpa in step S105, step S109 checks to see if the discharge pressure Pd is equal to or greater than a second set value of 13 Mpa. According to this embodiment, the second set value of 13 Mpa is an upper limit set for the discharge pressure Pd. If the discharge pressure Pd of the compressor 101 is greater than the upper limit, the discharge pressure Pd is abnormal. The discharge pressure Pd, however, must be high to some extent. Accordingly, the embodiment sets the value of 12.5 Mpa as a lower limit for the discharge pressure Pd. More specifically, the control amplifier 111 increases/decreases the duty factor of the ECV 107 so that the discharge pressure Pd of the compressor 101 is maintained within the range of 12.5 to 13 Mpa.

If step S109 determines that the discharge pressure Pd is equal to or greater than 13 Mpa, in step S110 the duty factor provided to the ECV adjuster 114 is decreased at a predetermined rate (for example, 1%/sec). The ECV adjuster 114 provides the ECV 107 with an electrical signal, based on the decreased duty factor.

If step S109 determines that the discharge pressure Pd is below 13 Mpa, i.e., if the discharge pressure Pd is within the range of 12.5 to 13 Mpa, no adjustment is made on the duty factor provided to the ECV adjuster 114 and step S103 is carried out.

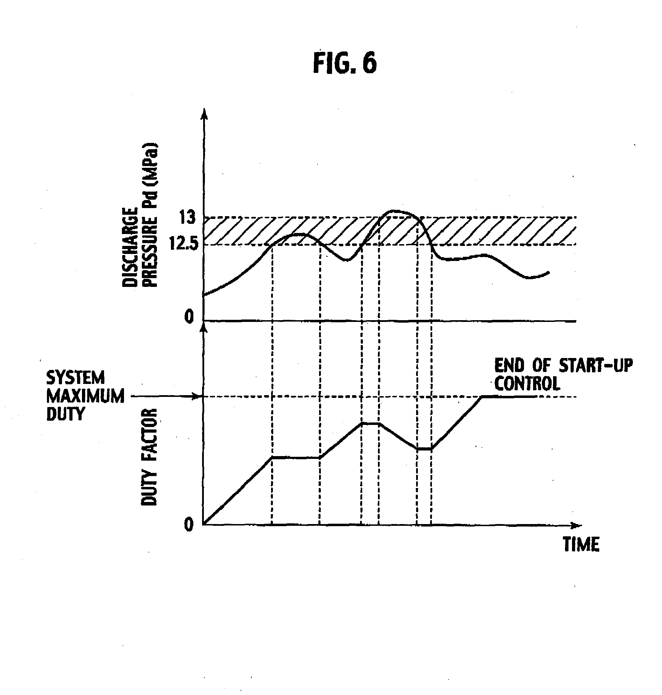

Figure 6 is a graph showing variations in the discharge pressure Pd according to the above-described control. The graph of Fig. 6 shows a relationship between an elapsed time from the start of the compressor 101, a duty factor, and the discharge pressure Pd.

At the start of the compressor 101, the embodiment increases the duty factor of the ECV 107 by a predetermined rate if the discharge pressure Pd of the compressor 101 is below 12.5 Mpa and decreases the duty factor by a predetermined rate if the discharge pressure Pd is equal to or greater than 13 Mpa. Accordingly, the embodiment can maintain the discharge pressure Pd of the compressor 101 in a relatively high pressure range close to the upper limit and can increase the duty factor of the ECV 107 up to a maximum system duty factor.

The discharge pressure Pd of the compressor 101 will be high if the compressor 101 is started shortly after stoppage. On the other hand, the discharge pressure Pd will be low if the compressor 101 is started a long period of time after stoppage. The embodiment can decrease the start-up time of the former case to be less than that of the latter case. The embodiment can maintain the discharge pressure Pd of the compressor 101 within a predetermined range until the ECV 107 provide for a full stroke of the piston. Namely, the embodiment can ensure a sufficient discharge capacity required for starting the compressor 101 and can safely decrease a start-up time of the compressor 101.

When the discharge pressure Pd of the compressor 101 is within the predetermined range, the embodiment does not increase or decrease the duty factor of the ECV 107. If the duty factor of the ECV 107 is increased when the discharge pressure Pd is within the predetermined range, the discharge pressure Pd will suddenly increase and may damage components of the refrigeration cycle 100. The embodiment can prevent such a sudden increase in the discharge pressure Pd.

In this way, the embodiment can properly control a start-up time of the compressor 101 according to a start-up load of the compressor 101.

Effect of this embodiment will be explained below.

The air conditioner according to this embodiment includes a compressor 101 configured to compress a refrigerant, an outside heat exchanger 102 configured to exchange heat of the compressed refrigerant, a pressure reducing unit 103 configured to reduce the pressure of the heat-exchanged refrigerant, an inside heat exchanger 104 configured to vaporize the pressure-reduced refrigerant, a discharge pressure detector 110 configured to detect a discharge pressure of the refrigerant discharged from the compressor 101, a controller 111 configured to provide a duty factor according to the detected discharge pressure, and a control valve 107 configured to adjust the discharge capacity of the compressor 101 according to the provided duty factor. The controller 111 controls, during a start-up operation of the compressor 101, the duty factor provided to the control valve 107 so that the discharge pressure detected by the discharge pressure detector 110 is maintained within a predetermined range and so that the duty factor reaches a maximum system duty factor.

If the pressure of the low-pressure side of the refrigeration cycle 100 is low and that of the high-pressure side thereof is high when starting the compressor 101 in a certain ambient temperature, the compressor 101 requires a small start-up load. If the low-pressure side and high-pressure side of the refrigeration cycle 100 are in an equilibrium state when starting the compressor 101 in the same ambient temperature, the compressor 101 requires a heavy start-up load. In the former case, the embodiment can decrease the start-up time of the compressor 101 and can more quickly achieve a full-stroke state than in the latter case without excessively increasing the discharge pressure of the compressor 101.

To achieve this, the embodiment does not need a data map indicating an optimum time dependent duty factors corresponding to heat load (for example ambient temperatures around the heat exchanger 102, 104). Namely, the embodiment does not create a risk of an unforeseen incident due to a lack of data in such data map, and therefore, can safely control a start-up operation of the compressor 101.

During the start-up operation of the compressor 101, the controller 111 increases the duty factor of the control valve 107 at a predetermined rate if the discharge pressure detected by the discharge pressure detector 110 is less than a first set value and decreases the duty factor at a predetermined rate if the detected discharge pressure is equal to or greater than a second set value that is greater than the first set value.

During the start-up operation of the compressor 101, the controller 111 maintains the duty factor of the control valve 107 if the detected discharge pressure is equal to or greater than the first set value and less than the second set value.

If the duty factor is increased when the discharge pressure of the compressor 101 is within the predetermined range, the discharge pressure will suddenly increase and may damage the components of the refrigeration cycle 100. The embodiment can prevent such a sudden increase in the discharge pressure of the compressor 101.

Although the present invention has been described above by reference to certain embodiments, the present invention is not limited to these embodiments. Modifications and variations of the embodiments can be made without departing from the spirit or scope of the appended claims. The embodiments are only for illustrative purposes and are not intended to limit the present invention.

## Claims

1. An air conditioner comprising:
a compressor (101) configured to compress a refrigerant;
an outside heat exchanger (102) configured to exchange heat of the compressed refrigerant,
a pressure reducing unit (103) configured to reduce the pressure of the heat-exchanged refrigerant;
an inside heat exchanger (104) configured to vaporize the reduced pressure refrigerant;
a discharge pressure detector (110) configured to detect a discharge pressure of the refrigerant discharged from the compressor (101);
a controller (111) configured to set a duty factor in accordance with the detected discharge pressure; and
a control valve (107) configured to adjust a discharge capacity of the compressor (101) in accordance with the duty factor,
the controller (111) controlling, during a start-up operation of the compressor (101), the duty factor provided to the control valve (107) so that the discharge pressure detected by the discharge pressure detector (110) is maintained within a predetermined range and so that the duty factor goes to a maximum system duty factor.

2. The air conditioner of claim 1, wherein:
during the start-up operation of the compressor (101), the controller (111) increases the duty factor at a predetermined rate when the detected discharge pressure from the discharge pressure detector (110) is less than a first set value and decreases the duty factor at a predetermined rate when the detected discharge pressure is equal to or greater than a second set value that is greater than the first set value.

3. The air conditioner of claim 2, wherein:
during the start-up operation of the compressor (101), the controller (111) maintains the duty factor provided to the control valve (107) when the detected discharge pressure from the discharge pressure detector (110) is equal to or greater than the first set value and less than the second set value.

4. The air conditioner of one of claims 1 to 3, wherein:
the air conditioner is a vehicle air conditioner installed in a vehicle (1); and
the compressor (101) is driven by an engine (106) of the vehicle (1).

5. A controller (111) for controlling a control valve (107) that adjusts a degree of opening of a pressure introducing path (154) connecting a discharge chamber (131) and crankcase (133) of a compressor (101) to each other, the controller (111) configured to:
provide a control signal to the control valve (107), the control signal representing a duty factor that determines the degree of opening of the pressure introducing path (154); and
provide the control signal, during a start-up operation of the compressor (101), to attain a maximum system duty factor and maintain a discharge pressure (Pd) of a refrigerant discharged from the compressor (101)within a predetermined range.
